# EUROPEAN PATENT APPLICATION

(11) **EP 1 909 449 A1**
(43) Date of publication of application: **09.04.2008**
(21) Application number: 06020739.6
(22) Date of filing: 02.10.2006
(51) Int. Cl.: H04L 29/06, H04L 12/56, H04Q 7/20

(54) **Method for the transmission of VoIP frames**

(71) Applicant: Nokia Siemens Networks GmbH & Co. KG, 81541 München (DE)
(72) Inventor: Klein, Axel, 81737 München (DE); Merz, Peter, 81373 München (DE); Viering, Ingo, Dr., 81539 München (DE)

(57) **Abstract**

The invention relates to a method for the transmission of VoIP frames between user-equipments and a radio communication system, using HSUPA in non-scheduled mode with a TTI of 2ms. A number of user-equipments transmit their VoIP packet, being created by a codec, delayed by a offset time value. The offset time value is determined randomly by each user-equipment.

## Description

The invention relates to a method for the transmission of VoIP frames between user-equipments and a radio communication system, using HSUPA in non-scheduled mode with a TTI of 2ms.

One of the primary goals of the design of "Enhanced-Dedicated Channel, E-DCH" or of "High Speed Uplink Packet Access, HSUPA" is to keep the so called "Rise over Thermal" or "Noise Rise over Thermal, RoT" or the so called "Received Total Wideband Power, RTWP" constant. This is necessary for stable WCDMA operation - a higher noise rise target leads finally to increased capacity within the radio communication system.

In the so called "non-scheduled mode" the "user equipments, UE" are allowed to transmit nearly autonomously. This non-scheduled mode will be used for "voice over internet protocol, VoIP".

When configured as "non-scheduled", the user-equipment transmits data as soon as possible, i.e. in a next activated "Hybrid Automatic Repeat-Request, HARQ" process.

Right now in the non-scheduled mode with a "time transmit intervall, TTI" of 2ms every user has eight HARQ processes, which can be controlled separately.

In one of a typical VoIP setting today, the RNC of the radio network configures all HARQ processes and the NodeB would not deactivate any of them. The user-equipment transmits a VoIP packet immediately as soon as it is created by the codec of the user-equipment - assuming that there is no delay in the user-equipment protocol stack.

A transmission in non-scheduled mode leads to a highly fluctuating noise rise and thereby to degradation of capacity.

In particular with a TTI of 2ms this effect is significant, because a VoIP packet has to be transmitted within a single TTI - otherwise the efficiency of a used Turbo Coding would be degraded significantly.

The first step to improve the situation of highly fluctuating noise rise is to use retransmissions with "Hybrid Automatic Repeat-Request, HARQ".

The second step to improve the situation of highly fluctuating noise rise is to give the RNC the possibility to allow just a subset of typically eight HARQ processes for active transmissions of a user-equipment. In doing so, the RNC is able to stagger some user-equipments in such way, that the noise rise over thermal is more balanced.

However, activity or inactivity of speech results in different subsets of user-equipments being simultaneously active. Today, state of the art RNC's are definitely too sluggish to follow the alternation of user equipments between speech and silence phases.

Another problem is that due to the regularity of the VoIP traffic (one packet every 20ms, synchronous retransmissions), collisions are likely to occur between the same user equipments repeatedly.

Therefore it is the aim of the present invention, to provide a method for the transmission of VoIP frames within a radio communication system, using HSUPA with a TTI of 2ms, which avoids continuous collisions between same user-equipments, in order to keep the RoT as constant as possible.

This aim is solved by the features of claim 1. Preferred embodiments of the invention are described within the succeeding claims.

According to the invention, VoIP frames of a number of user equipments are transmitted by HSUPA with a TTI of 2 ms in non-scheduled mode.

A number of user-equipments use random transmission offset time values. So they transmit a VoIP packet, being created by a codec, no longer immediately but delayed by the offset time value.

Because of the randomness the offset time values differ between the user equipments. The random offset time value is chosen in a preferred embodiment for every new VoIP packet.

Advantageously the implementation of the inventive steps is very simple also in already in existing radio systems.

Advantageously there will be only very few error-sources.

In a preferred embodiment, a RNC of the radio communication system selects the user-equipment, which have to use the random offset time value for transmission.
The selected user equipment will be informed via signalling.

The principle of HSUPA, to control the noise rise completely to keep it as constant as possible, is fulfilled with the easy implementation of the inventive method.

The inventive method is based on the currently specified HSUPA mechanism 25.309 V6.6.0, 25.321 V7.1.0 and 25.808 V6.0.0

The inventive method involves only a slightly modified behavior of user-equipments.

Advantageously noise rise outliers or "mavericks" are randomly distributed among all active user equipments.

Advantageously none of yet standardized signaling formats need to be changed.

The inventive use of random offset time values removes correlations. In a worst case scenario all user-equipments observe some collisions, but there will not be any complete call drops.

In a preferred embodiment the control of the user equipments, to transmit with the random transmission offset time value or not, is done by the RNC or the NodeB.

In a preferred embodiment the RNC configures the inventive operation mode for a user-equipment, because the RNC is aware of the corresponding user equipment behavior and is able to take this into account in radio-resource-management (RRM), for example when the HARQ process is configured or a noise rise limit is set.

In a preferred embodiment the NodeB is informed as well due to some "Continuous Packet Connectivity, CPC" related aspects.

In a preferred embodiment the NodeB is informed by signalling protocol "Node-B Application Part, NBAP".

According to the invention, a user-equipment randomly selects one of up to eight activated HARQ processes for transmission, whenever it has a new VoIP packet to transmit. The user equipment randomly delays the transmission for example up to eight TTI.

In case that the chosen HARQ process later turns out to be blocked for a HARQ retransmission, the next free HARQ process may be used instead.

## Claims

1. Method for the transmission of VoIP frames between user-equipments and a radio communication system, using HSUPA in non-scheduled mode with a TTI of 2ms,
- wherein a number of user-equipments transmit their VoIP packet, being created by a codec, delayed by a offset time value, and
- wherein the offset time value is determined randomly by each user-equipment.

2. Method according to claim 1, wherein the random offset time value is chosen for every new VoIP packet.

3. Method according to claim 1, wherein a RNC of the radio communication system selects the user-equipment, which have to use the random offset time value for transmission.

4. Method according to claim 3, wherein the selected user-equipment is informed via signalling, to use the random offset time value for transmission.

5. Method according claim 1, wherein a number of user-equipments are enabled to use their specific offset time value by signalling.

6. Method according claim 4 or 5, wherein a L3 signalling is done by the RNC of the radio communication system, to inform the selected user-equipment.

7. Method according claim 4, 5 or 6, wherein a NodeB of the radio communication system, which is assigned to the selected user equipments, is also informed about the selection.

8. Method according claim 7, wherein the NodeB is informed by a NBAP-signalling protocol.

9. Method according to one of the preceding claims,
- wherein a user equipment randomly selects one of up to eight activated HARQ processes for transmission, whenever it has a new VoIP packet to transmit, and
- wherein the user equipment randomly delays the transmission up to a predefined number of HARQ-processes, to choose a first HARQ-process.

10. Method according to claim 9, wherein the user equipment, in case that the first HARQ process turns out to be blocked for HARQ retransmission, choose the next free HARQ process instead.
